# EUROPEAN PATENT APPLICATION

(11) **EP 1 646 046 A1**
(43) Date of publication of application: **12.04.2006**
(21) Application number: 05256211.3
(22) Date of filing: 05.10.2005
(51) Int. Cl.: G11B 27/00, G11B 27/10, G11B 27/32

(54) **Recording medium reproducing apparatus, repeated reproduction method, and method of moving repeated reproduction section**

(30) Priority: 08.10.2004 JP 2004296613
(71) Applicant: ORION ELECTRIC CO., Ltd., Takefu-City, Fukui 915-8555 (JP)
(72) Inventor: Yamashita, Hiroyuki, Orion Electric Co., Ltd., Takefu-city, Fukui 915-8555 (JP)
(74) Representative: Paget, Hugh Charles Edward

(57) **Abstract**

A recording medium reproducing apparatus, a repeated reproduction method, and a method of moving a repeated reproduction section are provided, by which repeated reproduction can be performed and the repeated reproduction section can be moved with simple operations and the setting of the repeated reproduction section can be automatically changed according to each length data. The recording medium reproducing apparatus is characterized by including file reproducing means (2), repeated reproduction desired time setting means (3), memory means (4), repeated reproduction designated point setting means (5), comparing means (6) which can automatically set a repeated reproduction section by reading each data of length and comparing the data, repeated reproduction section moving means (7) capable of moving the repeated reproduction section in the forward and rewind directions while keeping the length of repeated reproduction time, and control means (8) for controlling all the operations.

## Description

### BACKGROUND OF THE INVENTION

### Field of the Invention

The present invention relates to a recording medium reproducing apparatus, a repeated reproduction method, and a method of moving a repeated reproduction section with repeated reproduction function in a DVD, an HDD, a VTR, an LD, a CD, an MD, a combination thereof, and the like.

### Description of the related art

A recording medium reproducing apparatus is an apparatus capable of reproducing the overall reproduction file length of an information recording/reproduction file from a reproduction file start point to a reproduction file end point. The information recording/reproduction file is recorded on a recording medium. Conventional recording medium apparatuses capable of repeated reproduction include, for example, "an information reproducing apparatus" of Japanese Patent Laid-Open Publication No. 10-312200.

The apparatus is, as described in claim 1, "an information reproducing apparatus, comprising: information reproducing means capable of repeatedly reproducing contents recorded on a recording medium, start position designating means for designating a start position of a repeated reproduction section, end position designating means for designating an end position of the repeated reproduction section, storage means for storing the start position and the end position, position change designating means capable of designating a change of at least one of the start position and the end position, and control means for performing control to repeatedly reproduce the section between the start position and the end position, and performing control, when the position change designating means designates a change during repeated reproduction, to sequentially change the repeated reproduction section in response to the designation". The repeated reproduction section is set by designating two points of the start position and the end position. The start position and the end position of the repeated reproduction section are changeable.

Regarding the repeated reproduction section set during the reproduction of a reproduction file in this apparatus, as described in claim 2, "the control means performs control, when the position change designating means designates a change of the start position, to automatically change the end position as well so as not to change a length of the repeated reproduction section, and performs control, when the position change designating means designates a change of the end position, to automatically change the start position as well so as not to change the length of the repeated reproduction section." In this method, the length between the start and end of the repeated reproduction is not changed but the start point and end point of repeated reproduction of a recording/reproduction file are changed. During repeated reproduction, the position of the repeated reproduction section can be moved in a skipping manner such that the position is jumped in the plus direction (forward direction) by an F-SKIP key and in the minus direction (rewind direction) by an R-SKIP key at regular intervals.

In the conventional recording medium reproducing apparatus, to set the start position and the end position of the repeated reproduction section during the reproduction of the recording/reproduction file, the user has to wait for a desired position after pressing the key once, and press the key again at the desired position, resulting in troublesome setting which becomes a burden on the user who operates the apparatus. Further, the conventional apparatus cannot handle a repeated reproduction section longer than a reproduction file. Moreover, the conventional apparatus cannot handle a repeated reproduction section and a reproduction file with different times and with excessive settings. Since the repeated reproduction section moves while jumping at regular intervals in this method, a movement cannot be smoothly adjusted in a precise manner and a start point or end point of repeated reproduction cannot be set at a desired point.

### SUMMARY OF THE INVENTION

The present invention is devised to solve the above-described problems. An object of the present invention is to provide quite a user-friendly recording medium reproducing apparatus, a repeated reproduction method, and a method of moving a repeated reproduction section, by which a simple operation is obtained for repeated reproduction, the repeated reproduction section can be set automatically according to a situation, and the repeated reproduction section can be moved to a desired point according to a method selected by the user.

A recording medium reproducing apparatus according to claim 1 of the present invention, characterized by comprising file reproducing means capable of reproducing a reproduction file recorded on a recording medium, repeated reproduction desired time setting means capable of setting the length (t) of desired repeated reproduction time, memory means for storing the length of desired repeated reproduction time, repeated reproduction designated point setting means capable of marking a designated point (a) of repeated reproduction only by one operation of a repeated reproduction key at a point where repeated reproduction is requested during the reproduction of the reproduction file, comparing means capable of automatically setting the start point and the end point of a repeated reproduction section for each situation by reading data of [length of desired repeated reproduction time](t), [overall time length of the reproduction file](Y), and [position information on the designated point (a) of repeated reproduction] (x) in the length of the reproduction file, and comparing the data, repeated reproduction section moving means capable of moving, when a movement of the repeated reproduction section is requested, the repeated reproduction section in the forward direction or the rewind direction by operating a repeated reproduction section moving key during repeated reproduction while keeping the same length of repeated reproduction time as the length before the movement, and control means for controlling all the operations.

A repeated reproduction method according to claim 2 of the present invention uses a recording medium reproducing apparatus comprising file reproducing means capable of reproducing a reproduction file recorded on a recording medium, repeated reproduction desired time setting means capable of setting the length (t) of desired repeated reproduction time, memory means for storing the length of desired repeated reproduction time, repeated reproduction designated point setting means capable of marking a designated point (a) of repeated reproduction only by one operation of a repeated reproduction key at a point where repeated reproduction is requested during the reproduction of the reproduction file, comparing means capable of automatically setting the start point and the end point of a repeated reproduction section for each situation by reading data of [length of desired repeated reproduction time](t), [overall time length of the reproduction file](Y), and [position information on the designated point (a) of repeated reproduction] (x) which is a length from the end point of the reproduction file, and comparing the data, repeated reproduction section moving means capable of moving, when a movement of the repeated reproduction section is requested, the repeated reproduction section in the forward direction or the rewind direction by operating a repeated reproduction section moving key during repeated reproduction while keeping the same length of repeated reproduction time as the length before the movement, and control means for controlling all the operations, characterized in that the memory means stores the length (t) of desired repeated reproduction time which can be set by the user anytime, the reproduction file recorded on the recording medium is reproduced, the designated point (a) of repeated reproduction is set by one operation of the repeated reproduction key when repeated reproduction is requested, [length of desired repeated reproduction time] (t) and [position information on the designated point (a) of repeated reproduction] (x) which is a length from the end point of the reproduction file are read, the comparing means automatically sets, when [t ≥ x] is not satisfied, the length (t) of desired repeated reproduction time starting from the designated point (a) of repeated reproduction as a repeated reproduction section before repeated reproduction is performed, and the comparing means automatically sets, when [t ≥ x] is satisfied, a section from the designated point (a) of repeated reproduction to the end point of the reproduction file as a repeated reproduction section before repeated reproduction is performed.

A repeated reproduction method according to claim 3 of the present invention uses a recording medium reproducing apparatus comprising file reproducing means capable of reproducing a reproduction file recorded on a recording medium, repeated reproduction desired time setting means capable of setting the length (t) of desired repeated reproduction time, memory means for storing the length of desired repeated reproduction time, repeated reproduction designated point setting means capable of marking a designated point (a) of repeated reproduction only by one operation of a repeated reproduction key at a point where repeated reproduction is requested during the reproduction of the reproduction file, comparing means capable of automatically setting the start point and the end point of a repeated reproduction section for each situation by reading data of [length of desired repeated reproduction time](t), [overall time length of the reproduction file](Y), and [position information on the designated point (a) of repeated reproduction] (x) which is a length from the end point of the reproduction file, and comparing the data, repeated reproduction section moving means capable of moving, when a movement of the repeated reproduction section is requested, the repeated reproduction section in the forward direction or the rewind direction by operating a repeated reproduction section moving key during repeated reproduction while keeping the same length of repeated reproduction time as the length before the movement, and control means for controlling all the operations, characterized in that the memory means stores the length (t) of desired repeated reproduction time which can be set by the user anytime, the reproduction file recorded on the recording medium is reproduced, the designated point (a) of repeated reproduction is set by one operation of the repeated reproduction key when repeated reproduction is requested, [length of desired repeated reproduction time](t), [overall time length of the reproduction file](Y), and [position information on the designated point (a) of repeated reproduction] (x) which is a length from the end point of the reproduction file are read, the comparing means automatically sets, when [t = 0] is satisfied, a section from the designated point (a) of repeated reproduction to the end point of the reproduction file as a repeated reproduction section before repeated reproduction is performed, the comparing means automatically sets, when [t = 0] is not satisfied but [t < x] is satisfied, the length (t) of desired repeated reproduction time starting from the designated point (a) of repeated reproduction as a repeated reproduction section before repeated reproduction is performed, the comparing means automatically sets, when neither [t = 0] nor [t < x] is satisfied but [t < Y] is satisfied, the length (t) of desired repeated reproduction time as a repeated reproduction section having the end point of the reproduction file at the end point of the repeated reproduction section before repeated reproduction is performed, and the comparing means automatically sets, when neither [t = 0], [t < x], nor [t < Y] is satisfied, the overall length of the reproduction file as a repeated reproduction section before repeated reproduction is performed.

A repeated reproduction method according to claim 4 of the present invention uses a recording medium reproducing apparatus comprising file reproducing means capable of reproducing a reproduction file recorded on a recording medium, repeated reproduction desired time setting means capable of setting the length (t) of desired repeated reproduction time, memory means for storing the length of the desired repeated reproduction time, repeated reproduction designated point setting means capable of marking a designated point (a) of repeated reproduction only by one operation of a repeated reproduction key at a point where repeated reproduction is requested during the reproduction of the reproduction file, comparing means capable of automatically setting the start point and the end point of a repeated reproduction section for each situation by reading data of [length of desired repeated reproduction time](t), [overall time length of the reproduction file](Y), [position information on the designated point (a) of repeated reproduction, which is a length from the end point of the reproduction file](x1), [position information on the designated point (a) of repeated reproduction, which is a length from the start point of the reproduction file] (x2) and comparing the data, repeated reproduction section moving means capable of moving, when a movement of the repeated reproduction section is requested, the repeated reproduction section in the forward direction or the rewind direction by operating a repeated reproduction section moving key during repeated reproduction while keeping the same length of repeated reproduction time as the length before the movement, and control means for controlling all the operations, characterized in that the memory means stores the length (t) of desired repeated reproduction time which can be set by the user anytime, the length (t) being composed of desired repeated reproduction time (t1) in the forward direction and desired repeated reproduction time (t2) in the rewind direction from the designated point (a) of repeated reproduction, the reproduction file recorded on the recording medium is reproduced, the designated point (a) of repeated reproduction is set by one operation of the repeated reproduction key when repeated reproduction is requested, [desired repeated reproduction time (t) of desired repeated reproduction time (t1) in the forward direction and desired repeated reproduction time (t2) in the rewind direction], [overall time length of the reproduction file](Y), and [position information (x1) on a length from the end point of the reproduction file and position information (x2) on a length from the start point of the reproduction file] (x) are read, the comparing means automatically sets, when [t = 0] is satisfied or when [t = 0] is not satisfied but [t1 ≥ x1] and [t2 ≥ x2] are satisfied, the overall length of the reproduction file as a repeated reproduction section before repeated reproduction is performed, the comparing means automatically sets as a repeated reproduction section, when neither [t = 0] nor [t2 ≥ x2] is satisfied but [t1 ≥ x1] is satisfied, a section from a point preceding the designated point (a) of repeated reproduction by the length (t2) of desired repeated reproduction time in the rewind direction to the end point of the reproduction file before repeated reproduction is performed, the comparing means automatically sets, when neither [t = 0] nor [t1 ≥ x1] is satisfied but [t2 ≥ x2] is satisfied, the length (t1) of desired repeated reproduction time in the forward direction of the designated point (a) of repeated reproduction as a repeated reproduction section from the start end of the reproduction file before repeated reproduction is performed, and the comparing means automatically sets as a repeated reproduction section, when neither [t = 0] , [t1 ≥ x1], nor [t2 ≥ x2] is satisfied, the length (t) of desired repeated reproduction time composed of the desired repeated reproduction time (t1) in the forward direction and the desired repeated reproduction time (t2) in the rewind direction of the designated point (a) of repeated reproduction.

A repeated reproduction method according to claim 5 of the present invention uses a recording medium reproducing apparatus comprising file reproducing means capable of reproducing a reproduction file recorded on a recording medium, repeated reproduction desired time setting means capable of setting the length (t) of desired repeated reproduction time, memory means for storing the length of desired repeated reproduction time, repeated reproduction designated point setting means capable of marking a designated point (a) of repeated reproduction only by one operation of a repeated reproduction key at a point where repeated reproduction is requested during the reproduction of the reproduction file, comparing means capable of automatically setting the start point and the end point of a repeated reproduction section for each situation by reading data of [length of desired repeated reproduction time](t), [overall time length of the reproduction file](Y), and [position information on the designated point (a) of repeated reproduction] (x), which is a length from the start point of the reproduction file, and comparing the data, repeated reproduction section moving means capable of moving, when a movement of the repeated reproduction section is requested, the repeated reproduction section in the forward direction or the rewind direction by operating a repeated reproduction section moving key during repeated reproduction while keeping the same length of repeated reproduction time as the length before the movement, and control means for controlling all the operations, characterized in that the memory means stores the length (t) of desired repeated reproduction time which can be set by the user anytime, the reproduction file recorded on the recording medium is reproduced, the designated point (a) of repeated reproduction is set by one operation of the repeated reproduction key when repeated reproduction is requested, [length of desired repeated reproduction time] (t) and [position information on the designated point (a) of repeated reproduction] (x) which is a length from the start point of the reproduction file are read, the comparing means automatically sets, when [t ≥ x] is not satisfied, the length (t) of desired repeated reproduction as a repeated reproduction section having the designated point (a) of repeated reproduction at the end point of the repeated reproduction section before repeated reproduction is performed, and the comparing means automatically sets, when [t ≥ x] is satisfied, a section from the start point of the reproduction file to the designated point (a) of repeated reproduction as a repeated reproduction section before repeated reproduction is performed.

A repeated reproduction method according to claim 6 of the present invention uses a recording medium reproducing apparatus comprising file reproducing means capable of reproducing a reproduction file recorded on a recording medium, repeated reproduction desired time setting means capable of setting the length (t) of desired repeated reproduction time, memory means for storing the length of desired repeated reproduction time, repeated reproduction designated point setting means capable of marking a designated point (a) of repeated reproduction only by one operation of a repeated reproduction key at a point where repeated reproduction is requested during the reproduction of the reproduction file, comparing means capable of automatically setting the start point and the end point of a repeated reproduction section for each situation by reading data of [length of desired repeated reproduction time](t), [overall time length of the reproduction file](Y), and [position information on the designated point (a) of repeated reproduction] (x) which is a length from the start point of the reproduction file, and comparing the data, repeated reproduction section moving means capable of moving, when a movement of the repeated reproduction section is requested, the repeated reproduction section in the forward direction or the rewind direction by operating a repeated reproduction section moving key during repeated reproduction while keeping the same length of repeated reproduction time as the length before the movement, and control means for controlling all the operations, characterized in that the memory means stores the length (t) of desired repeated reproduction time which can be set by the user anytime, the reproduction file recorded on the recording medium is reproduced, the designated point (a) of repeated reproduction is set by one operation of the repeated reproduction key when repeated reproduction is requested, [length of desired repeated reproduction time](t), [overall time length of the reproduction file(Y)], and [position information on the designated point (a) of repeated reproduction] (x) which is a length from the start point of the reproduction file are read, the comparing means automatically sets, when [t = 0] is satisfied, a section from the start point of the reproduction file to the designated point (a) of repeated reproduction as a repeated reproduction section before repeated reproduction is performed, the comparing means automatically sets, when [t = 0] is not satisfied but [t < x] is satisfied, the length (t) of desired repeated reproduction as a repeated reproduction section having the designated point (a) of repeated reproduction at the end point of the repeated reproduction section before repeated reproduction is performed, the comparing means automatically sets, when neither [t = 0] nor [t < x] is satisfied but [t < Y] is satisfied, the length (t) of desired repeated reproduction time from the start end point of the reproduction file as a repeated reproduction section before repeated reproduction is performed, and the comparing means automatically sets, when neither [t = 0], [t < x], nor [t < Y] is satisfied, the overall length of the reproduction file as a repeated reproduction section before repeated reproduction is performed.

A method of moving a repeated reproduction section according to claim 7 of the present invention in a recording medium reproducing apparatus capable of implementing the repeated reproduction method according to claim 2, 3, 4, 5 or 6, characterized by comprising: moving a repeated reproduction section in the forward direction by the time of a long press in response to the long press on a repeated reproduction section forward direction moving key when the user requests a movement of the repeated reproduction section during repeated reproduction; moving the repeated reproduction section in the rewind direction by the time of a long press in response to the long press on a repeated reproduction section rewind direction moving key; changing a point where the repeated reproduction section forward direction moving key is shortly pressed to the start point of the repeated reproduction section and moving the repeated reproduction section accordingly; and changing a point where the repeated reproduction section rewind direction moving key is shortly pressed to the end point of the repeated reproduction section and moving the repeated reproduction section accordingly; the moved repeated reproduction section having a length equal to that before the movement.

A method of moving a repeated reproduction section according to claim 8 of the present invention, in the method of moving the repeated reproduction section according to claim 7, characterized in that the repeated reproduction section forward direction moving key is assigned to an FF key and the repeated reproduction section rewind direction moving key is assigned to a REW key.

A recording medium reproducing apparatus according to claim 9 of the present invention, the recording medium reproducing apparatus capable of implementing at least two or more of the repeated reproduction methods according to claim 2, 3, 4, 5, or 6 and the method of moving the repeated reproduction section according to claim 7 or 8, the apparatus characterized by comprising repeated reproduction method selecting means allowing the user to select a desired repeated reproduction method.

With the recording medium reproducing apparatus, the repeated reproduction method, and the method of moving the repeated reproduction section, the length (t) of desired repeated reproduction time is set and stored in the memory means, so that the repeated reproduction section can be set by only one operation of the repeated reproduction key. The length (t) of desired repeated reproduction time can be set anytime. The repeated reproduction key may be operated both in normal reproduction and repeated reproduction as long as the reproduction file is being reproduced. The designated point (a) of repeated reproduction is set on a point when the repeated reproduction key is operated once. The comparing means automatically sets the start point and the end point of the repeated reproduction section for each situation by reading data of [length of desired repeated reproduction time] (t) , [overall time length of a reproduction file] (Y), and [position information on a designated point (a) of repeated reproduction] (x) in the length of the reproduction file, and comparing the data. Thereafter, repeated reproduction is repeated in the set section. The comparing steps are different for each of the repeated reproduction methods, so that the setting result of the repeated reproduction section may be different for each situation. With the repeated reproduction method selecting means, it is possible to select a repeated reproduction method in response to a request from the user. The repeated reproduction section is moved by two operating methods using two keys of the repeated reproduction section forward direction moving key and the repeated reproduction section rewind direction moving key, so that four moving patterns can be freely used. That is, with a long press on the repeated reproduction section forward direction moving key, the repeated reproduction section can be moved in the forward direction by the time of the press. With a short press on the repeated reproduction section forward direction moving key, a pressed point is set as the start point of the repeated reproduction section and the repeated reproduction section can be moved accordingly in the forward direction. With a long press on the repeated reproduction section rewind direction moving key, the repeated reproduction can be moved in the rewind direction by the time of the press. With a short press on the repeated reproduction section rewind direction moving key, a pressed point is set as the end point of the repeated reproduction section and the repeated reproduction section can be moved accordingly in the rewind direction. These moving operations make it possible to quickly move the repeated reproduction section with high accuracy.

### BRIEF DESCRIPTION OF THE DRAWINGS

FIG. 1 is an explanatory drawing showing the configuration of a recording medium reproducing apparatus.
FIG. 2 is an explanatory drawing showing an example where the recording medium reproducing apparatus is microprocessor-controlled.
FIG. 3 is an explanatory drawing showing a menu screen.
FIG. 4 is a flowchart showing a first repeated reproduction method.
FIG. 5 is an explanatory drawing for explaining the setting of a repeated reproduction section in the flowchart of FIG. 4.
FIG. 5(A) shows that repeated reproduction is performed from a designated point of repeated reproduction by the length of desired repeated reproduction time.
FIG. 5(B) shows repeated reproduction is performed from a designated point of repeated reproduction to the end point of a reproduction file.
FIG. 6 is a flowchart showing a second repeated reproduction method.
FIG. 7 is an explanatory drawing for explaining the setting of the repeated reproduction section in the flowchart of FIG. 6.
FIG. 7(A) shows that repeated reproduction is performed from a designated point of repeated reproduction to the end point of the reproduction file.
FIG. 7(B) is an explanatory drawing showing that repeated reproduction is performed from a designated point of repeated reproduction by the length of desired repeated reproduction time.
FIG. 7(C) shows that repeated reproduction is performed from a point preceding by the length of desired repeated reproduction time to the end point of the reproduction file.
FIG. 7(D) shows that the overall length of the reproduction file is repeatedly reproduced.
FIG. 8 is a flowchart showing a third repeated reproduction method.
FIG. 9 is a flowchart showing the third repeated reproduction method.
FIG. 10 is an explanatory drawing for explaining the setting of the repeated reproduction section in the flowcharts of FIGS. 8 and 9.
FIG. 10(A) shows that the overall length of the reproduction file is repeatedly reproduced.
FIG. 10(B) shows that the repeated reproduction section is shorter by the length of desired repeated reproduction time from the end point of the reproduction file.
FIG. 10(C) shows that the repeated reproduction section is shorter by the length of desired repeated reproduction time from the start point of the reproduction file.
FIG. 10(D) shows that repeated reproduction is performed before and after a designated point of repeated reproduction by the length of desired repeated reproduction time.
FIG. 11 is a flowchart showing a fourth repeated reproduction method.
FIG. 12 is an explanatory drawing for explaining the setting of a repeated reproduction section in the flowchart of FIG. 11.
FIG. 12 (A) shows that repeated reproduction is performed from a point preceding a designated point of repeated reproduction by the length of desired repeated reproduction time to the designated point of repeated reproduction.
FIG. 12 (B) shows that repeated reproduction is performed from the start point of the reproduction file to a designated point of repeated reproduction.
FIG. 13 is a flowchart showing a fifth repeated reproduction method.
FIG. 14 is an explanatory drawing for explaining the setting of the repeated reproduction section in the flowchart of FIG. 13.
FIG. 14(A) shows that the repeated reproduction section is shorter than the length of desired repeated reproduction time from the start point of the reproduction file.
FIG. 14 (B) shows that repeated reproduction is performed from a point preceding by the length of desired repeated reproduction time to a designated point of repeated reproduction.
FIG. 14(C) shows that the repeated reproduction section is equal to the length of desired repeated reproduction time from the start point of the reproduction file.
FIG. 14 (D) shows that the overall length of the reproduction file is repeatedly reproduced regardless of a designated point of repeated reproduction.
FIG. 15 is a flowchart for setting a change of the repeated reproduction section.
FIG. 16 is an explanatory drawing showing the movement of the repeated reproduction section in the flowchart of FIG. 15.
FIG. 16(A) shows that the point of the repeated reproduction section is moved in the forward direction by the time of a long press.
FIG. 16(B) shows that the point of the repeated reproduction section is moved in the rewind direction by the time of a long press.
FIG. 16 (C) shows that a setting is changed while setting another designated point of repeated reproduction as a new start point and the repeated reproduction section is moved in the forward direction.
FIG. 16 (D) shows that a setting is changed while setting another designated point of repeated reproduction as a new end point and the repeated reproduction section is moved in the rewind direction.

### DETAILED DESCRIPTION OF THE PREFERRED EMBODIMENTS

The following will describe an example of a preferred embodiment for implementing a recording medium reproducing apparatus, a repeated reproduction method, and a method of moving a repeated reproduction section of the present invention in accordance with the accompanying drawings. The present invention is not limited to this embodiment.

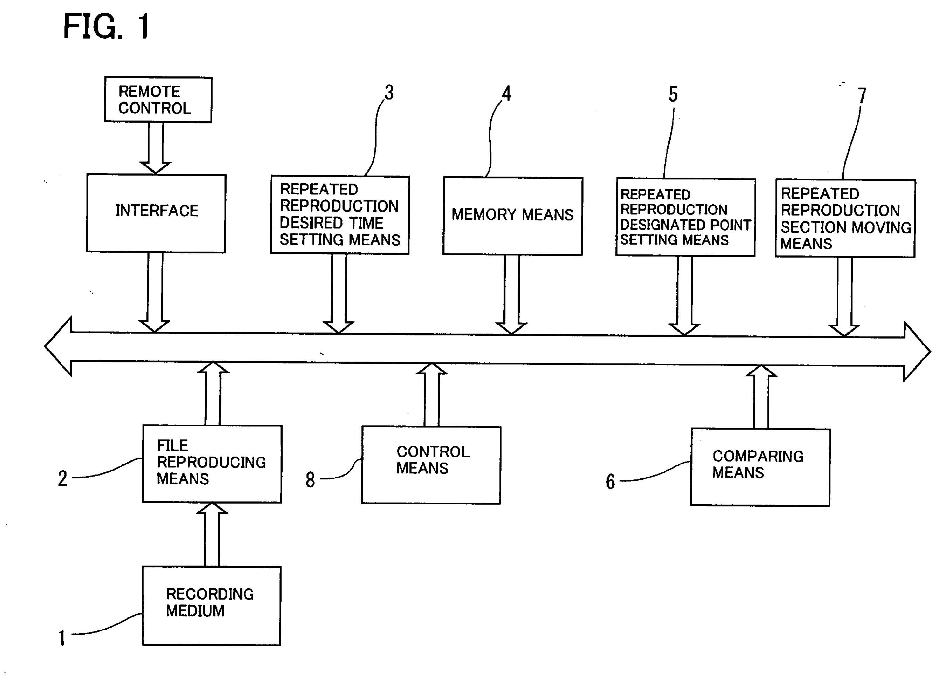

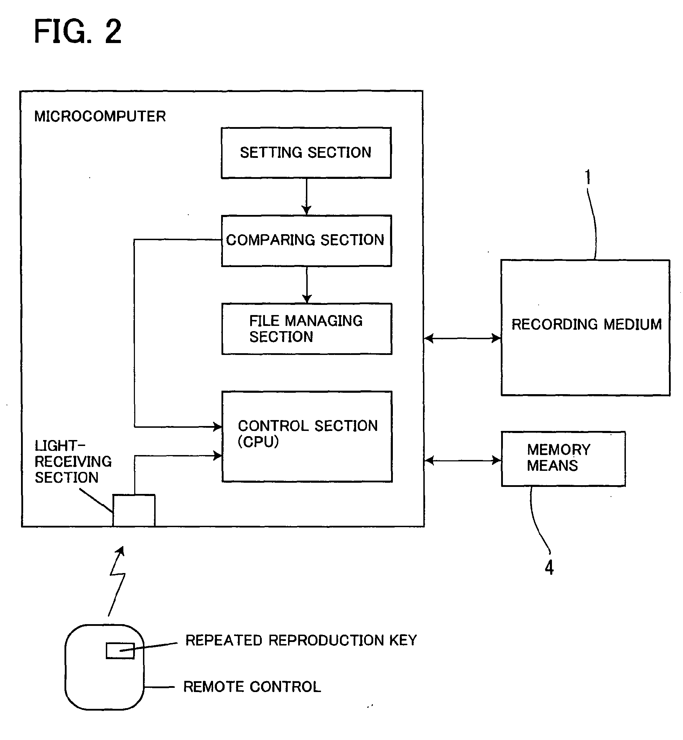

FIG. 1 shows the configuration of the recording medium reproducing apparatus. Reference numeral 1 denotes a recording medium where a reproduction file is recorded. Reference numeral 2 denotes file reproducing means for reproducing a reproduction file. Reference numeral 3 denotes repeated reproduction desired time setting means for setting a length of time, which is desired by the user, from the start to end of repeated reproduction. Reference numeral 4 denotes memory means for storing data set by the repeated reproduction desired time setting means 3. Reference numeral 5 denotes repeated reproduction designated point setting means for setting the position of a reproduction file when the user performs an operation of repeated reproduction during the reproduction of the reproduction file. Reference numeral 6 denotes comparing means which can automatically set the start point and the end point of a repeated reproduction section for each situation by reading data of [length of desired repeated reproduction time] (t) , [overall time length of a reproduction file] (Y) , and [position information on a designated point (a) of repeated reproduction] (x) in the length of the reproduction file, and comparing the data. Reference numeral 7 denotes repeated reproduction section moving means which can move, during repeated reproduction, the repeated reproduction section in the forward direction or the rewind direction in response to an operation of a repeated reproduction section moving key while keeping the same length of repeated reproduction time as the length before the movement. A repeated reproduction section forward direction moving key is assigned to an FF key and a repeated reproduction section rewind direction moving key is assigned to a REW key. These keys may be assigned to other keys or dedicated keys may be provided. Reference numeral 8 denotes control means for controlling the overall apparatus. Setting, reading, comparison, control, and the like can be easily performed by a microcomputer. Main operations are performed by a remote control through an interface section. The interface section and the means are connected through communications so as to operate in a cooperative manner. FIG. 2 shows an example where the recording medium reproducing apparatus is microprocessor-controlled. A microcomputer is constituted of a setting section, a comparison section, a file management section, a control section, and a light-receiving section, and is connected to the recording medium 1 and the memory means 4. When the repeated reproduction key of the remote control is pressed, a signal is received by the light-receiving section and repeated reproduction is started.

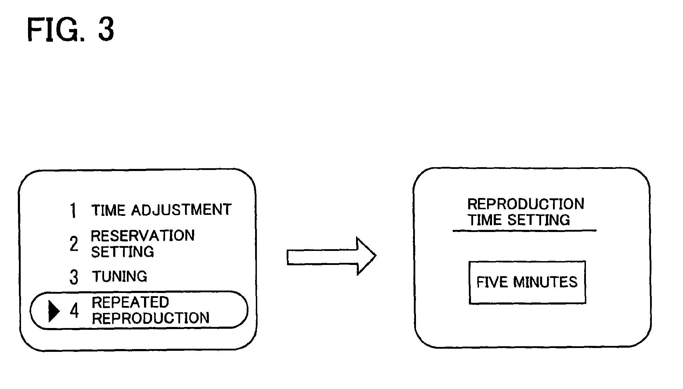

An operation flow will be discussed below. First, on a menu screen illustrated in FIG. 3, a length (t) of desired repeated reproduction time is set. In this example, the length (t) of desired repeated reproduction time is set at five minutes. The length (t) can be set anytime. Once the setting is completed, another operation is not necessary until the setting is changed.

Then, the file reproducing means 2 is caused to start reproducing a reproduction file having been stored in the recording medium 1. During the reproduction of the reproduction file, the user can start repeated reproduction only by one press of a repeated reproduction key at a desired point. The same section of the reproduction file is repeatedly reproduced until the repeated reproduction is canceled.

By pressing the repeated reproduction key, it is possible to perform a series of operations of setting a designated point (a) of repeated reproduction in the reproduction file, reading data of [length of desired repeated reproduction time] (t) , [overall time length of the reproduction file](Y), and [position information on the designated point (a) of repeated reproduction] (x) in the length of the reproduction file, automatic setting of the start point and the end point of the repeated reproduction section based on the data by the comparing means 6, and repeated reproduction of the repeated reproduction section by the file reproducing means 2. The [overall time length of the reproduction file] (Y) and [position information on the designated point (a) of repeated reproduction] (x) in the length of the reproduction file are detected from each recording file of the recording medium 1.

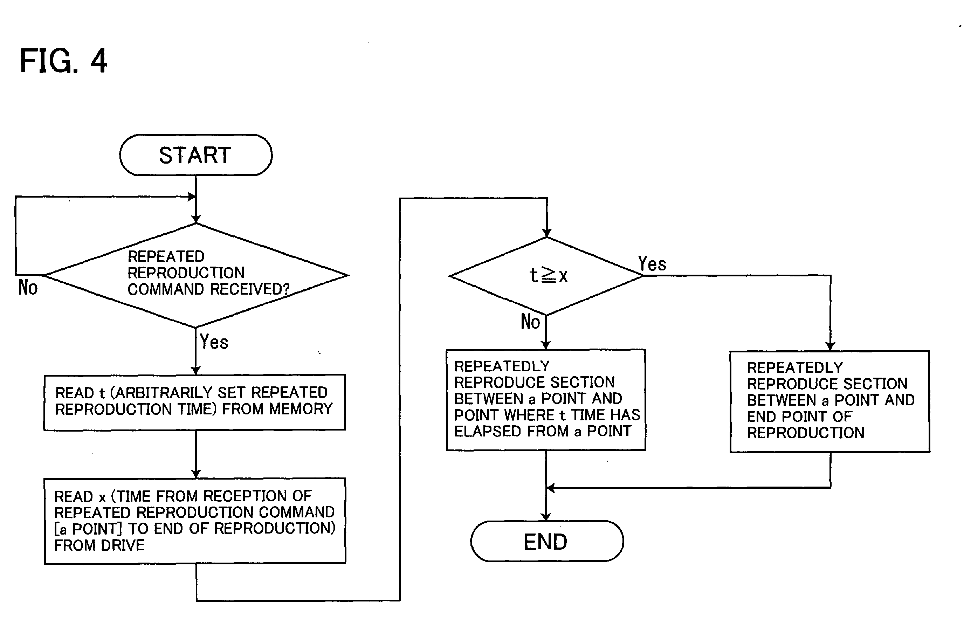

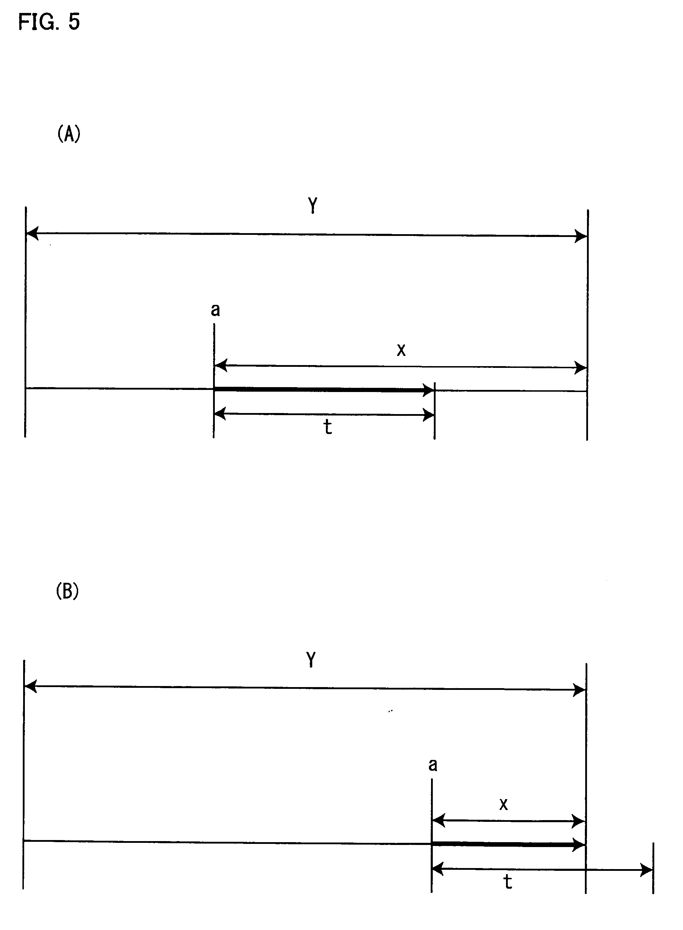

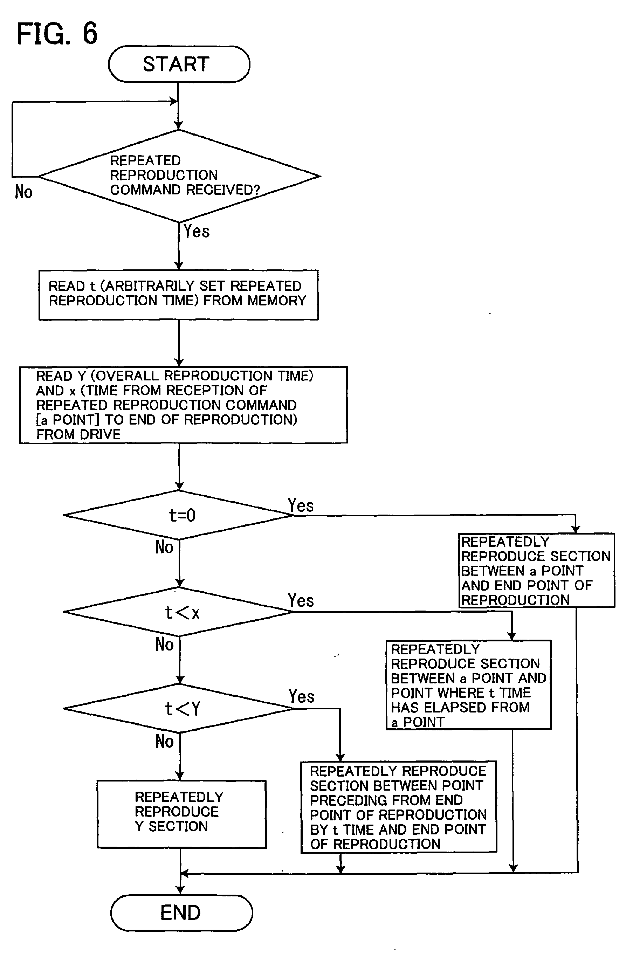

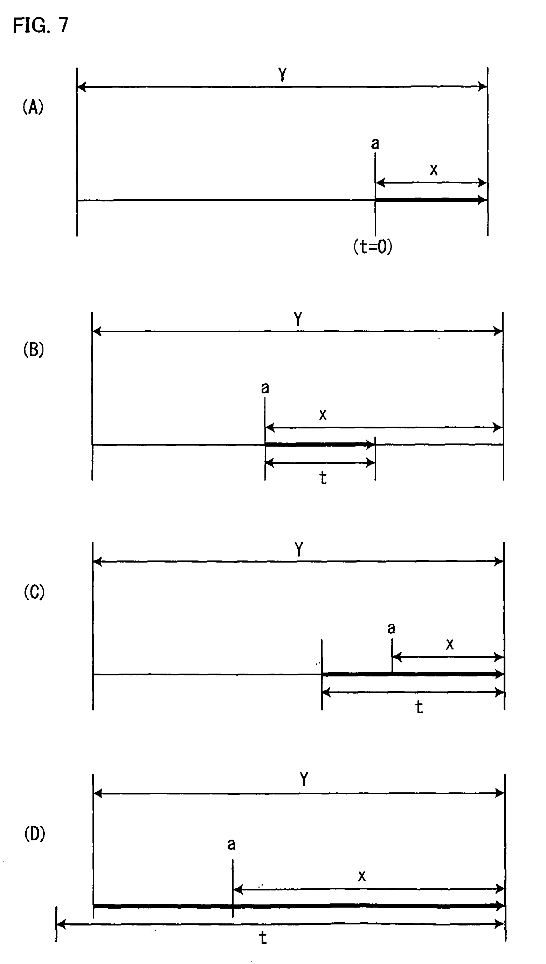

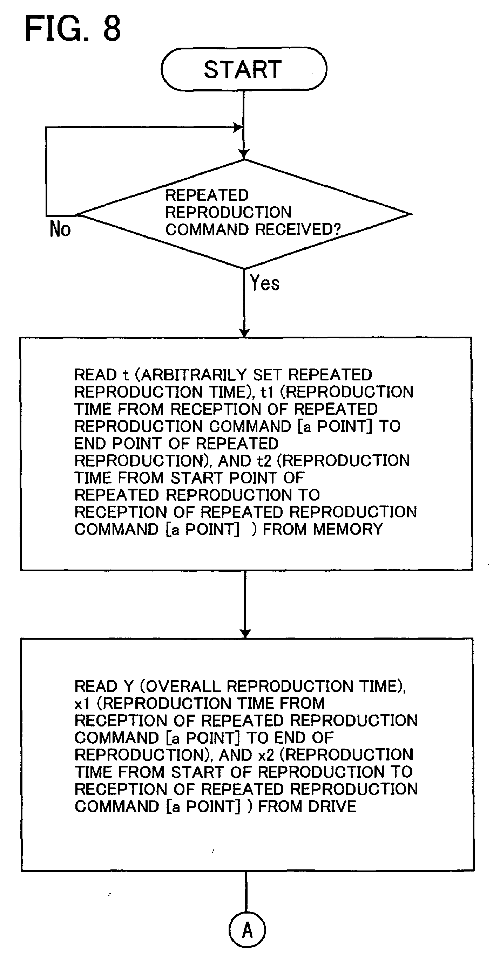

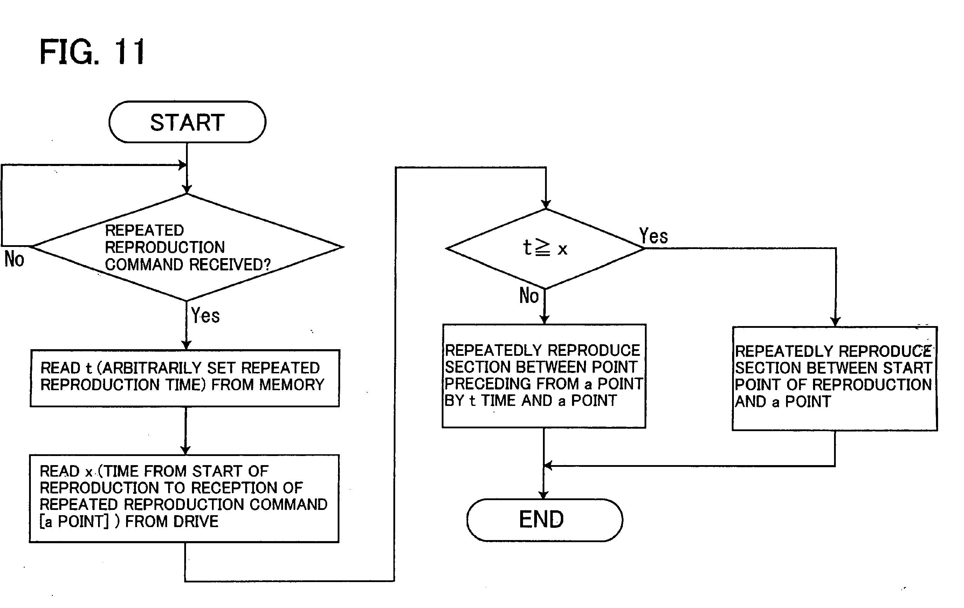

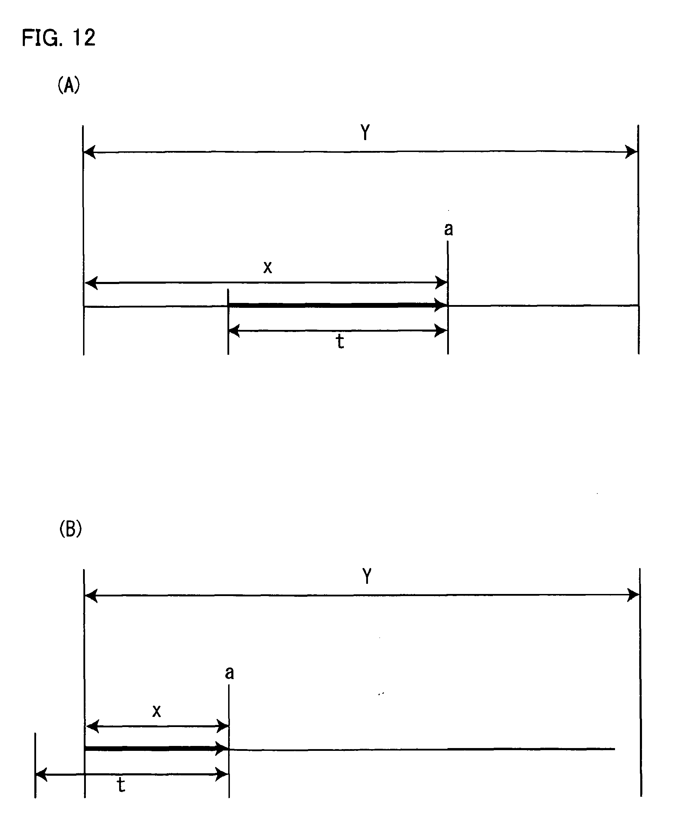

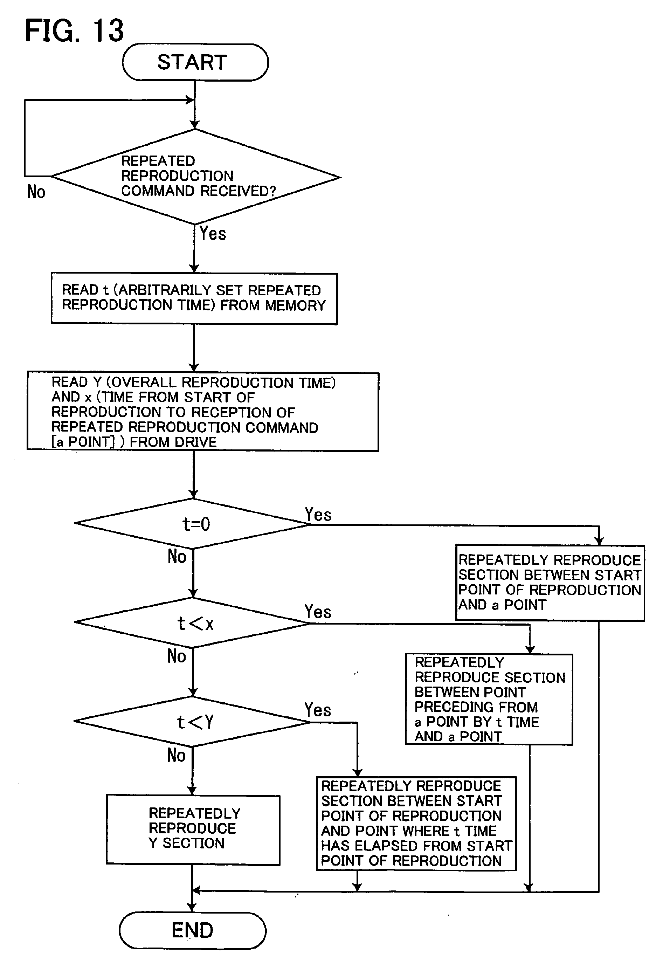

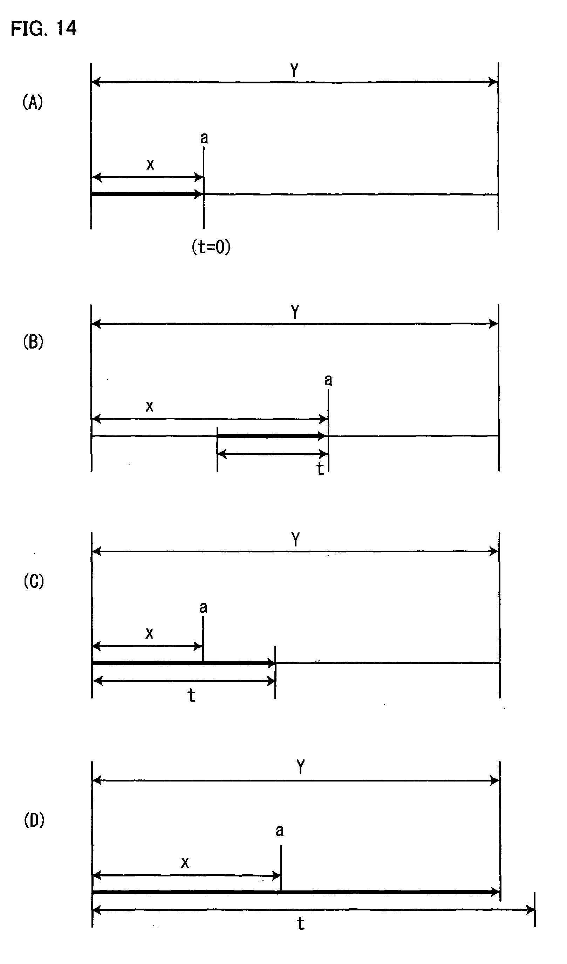

A different repeated reproduction method is used for each comparing method of the comparing means 6. At least two or more repeated reproduction methods can be implemented in the recording medium reproducing apparatus of the present embodiment. A repeated reproduction method desired by the user can be selected by the repeated reproduction method selecting means. Five repeated reproduction methods are available which are a first method of FIGS. 4 and 5, a second method of FIGS. 6 and 7, a third method of FIGS. 8, 9, and 10, a fourth method of FIGS. 11 and 12, and a fifth method of FIGS. 13 and 14 (just numbered at random). In these figures, arrows indicated by thick lines represent repeated reproduction sections which have been automatically set.

According to the first repeated reproduction method shown in the flowchart of FIG. 4, data of [length of desired repeated reproduction time](t) and [position information on a designated point (a) of repeated reproduction] (x), which is a length from the start point of the reproduction file, are read and compared with each other. When [t ≥ x] is not satisfied, [length of desired repeated reproduction time] (t) starting from the designated point (a) of repeated reproduction is automatically set as a repeated reproduction section before repeated reproduction is performed (FIG. 5(B)). When [t ≥ x] is satisfied, a repeated reproduction section from a designated point (a) of repeated reproduction to the end point of the reproduction file is automatically set as a repeated reproduction section before repeated reproduction is performed (FIG. 5(B)).

According to the second repeated reproduction method shown in the flowchart of FIG. 6, data of [length of desired repeated reproduction time] (t), [overall time length of a reproduction file(Y)], and [position information on a designated point (a) of repeated reproduction] (x), which is a length from the end point of the reproduction file, are read and compared with one another. When [t = 0] is satisfied, a section from the designated point (a) of repeated reproduction to the end point of the reproduction file is automatically set as a repeated reproduction section before repeated reproduction is performed (FIG. 7(A)). When [t = 0] is not satisfied but [t < x] is satisfied, the length (t) of desired repeated reproduction time starting from the designated point (a) of repeated reproduction is automatically set as a repeated reproduction section before repeated reproduction is performed (FIG. 7(B)). When neither [t = 0] nor [t < x] is satisfied but [t < Y] is satisfied, the length (t) of desired repeated reproduction time is automatically set as a repeated reproduction section having the end point of the reproduction file at the end point of the repeated reproduction section, and repeated reproduction is performed (FIG. 7(C)). When neither [t = 0], [t < x], nor [t < Y] is satisfied, the overall length of a reproduction file is automatically set as a repeated reproduction section before repeated reproduction is performed (FIG. 7(D)). [t = 0] indicates that the length of desired repeated reproduction time is 0 and includes the case where a setting is not made.

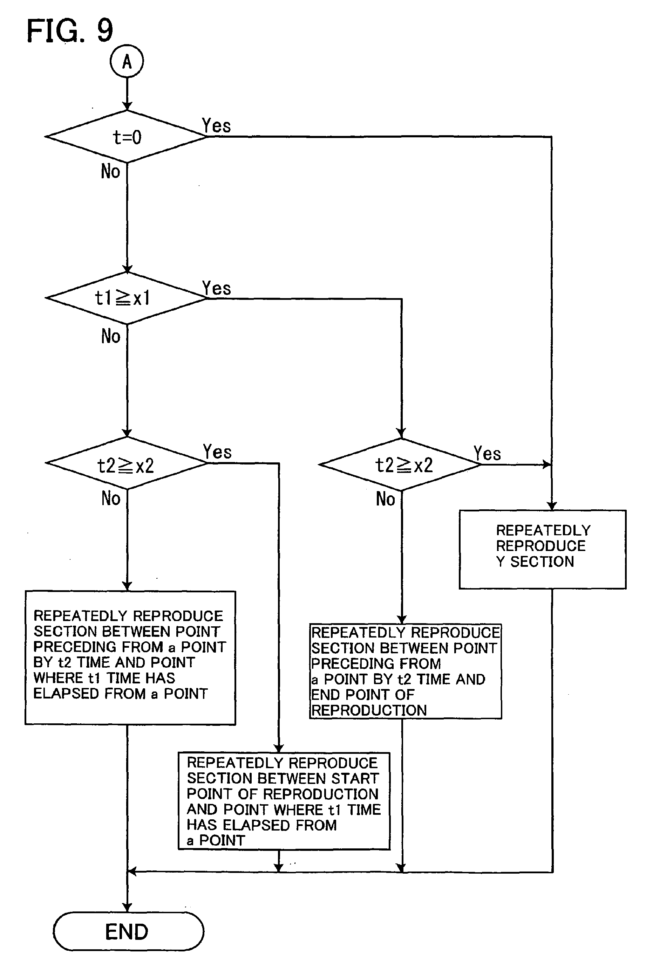

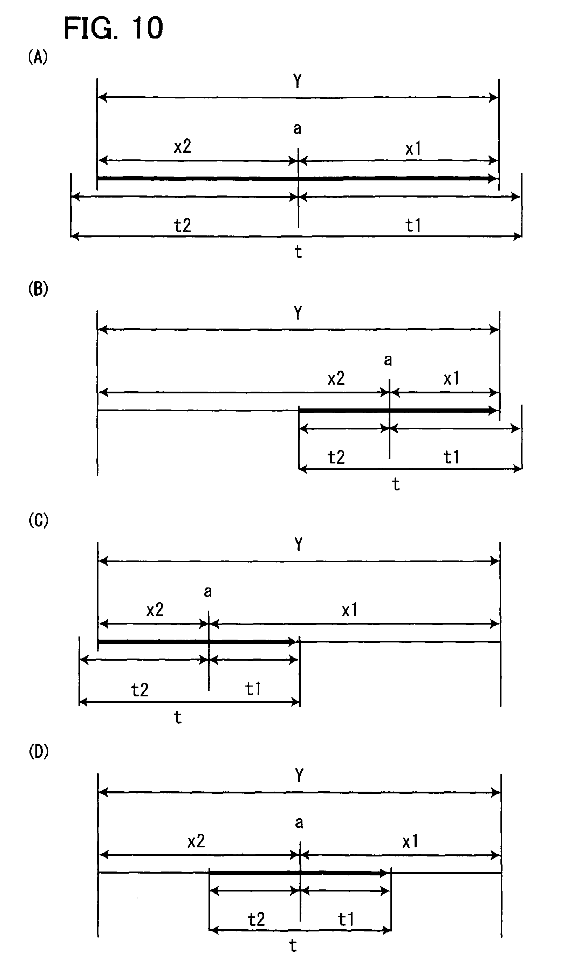

According to the third repeated reproduction method shown in the flowcharts of FIGS. 8 and 9, data of [desired repeated reproduction time (t) of desired repeated reproduction time (t1) in the forward direction and desired repeated reproduction time (t2) in the rewind direction], [overall time length of a reproduction file](Y), and [position information (x1) on a length from the end point of the reproduction file at a designated point (a) of repeated reproduction and position information (x2) on a length from the start point of the reproduction file at the designated point (a) of repeated reproduction] (x) are read and compared with one another. When [t = 0] is satisfied or when [t = 0] is not satisfied but [t1 ≥ x1] and [t2 ≥ x2] are satisfied, the overall length of the reproduction file is automatically set as a repeated reproduction section before repeated reproduction is performed (FIG. 10(A)). When neither [t = 0] nor [t2 ≥ x2] is satisfied but [t1 ≥ x1] is satisfied, a section from a point preceding the designated point (a) of repeated reproduction by the length (t2) of desired repeated reproduction time in the rewind direction to the end point of the reproduction file is automatically set as a repeated reproduction section before repeated reproduction is performed (FIG. 10(B)). When neither [t = 0] nor [t1 ≥ x1] is satisfied but [t2 ≥ x2] is satisfied, the length (t1) of desired repeated reproduction time in the forward direction of the designated point (a) of repeated reproduction is automatically set as a repeated reproduction section from the start end of the reproduction file before repeated reproduction is performed (FIG. 10(C)). When neither [t = 0] , [t1 ≥ x1], nor [t2 ≥ x2] is satisfied, the length (t) composed of the desired repeated reproduction time (t1) in the forward direction and the desired repeated reproduction time (t2) in the rewind direction from the designated point (a) of repeated reproduction is automatically set as a repeated reproduction section before repeated reproduction is performed (FIG. 10(D)). [t = 0] indicates that the length of desired repeated reproduction time is 0 and includes the case where a setting is not made.

According to the fourth repeated reproduction method shown in the flowchart of FIG. 11, data of [length of desired repeated reproduction time](t) and [position information on a designated point (a) of repeated reproduction] (x), which is a length from the start point of the reproduction file, are read and compared with each other. When [t ≥ x] is not satisfied, the length (t) of desired repeated reproduction is automatically set as a repeated reproduction section having the designated point (a) of repeated reproduction at the end point of the repeated reproduction section, and repeated reproduction is performed (FIG. 12 (A)). When [t ≥ x] is satisfied, a section from the start point of the reproduction file to the designated point (a) of repeated reproduction is automatically set as a repeated reproduction section before repeated reproduction is performed (FIG. 12(B)).

According to the fifth repeated reproduction method shown in the flowchart of FIG. 13, data of [length of desired repeated reproduction time] (t), [overall time length of a reproduction file(Y)], and [position information on a designated point (a) of repeated reproduction] (x), which is a length from the start point of the reproduction file, are read and compared with one another. When [t = 0] is satisfied, a section from the start point of the reproduction file to the designated point (a) of repeated reproduction is automatically set as a repeated reproduction section before repeated reproduction is performed (FIG. 14(A)). When [t = 0] is not satisfied but [t < x] is satisfied, the length (t) of desired repeated reproduction is automatically set as a repeated reproduction section having the designated point (a) of repeated reproduction at the end point of the repeated reproduction section before repeated reproduction is performed (FIG. 14(B)). When neither [t = 0] nor [t < x] is satisfied but [t < Y] is satisfied, the length (t) of desired repeated reproduction time from the start end point of the reproduction file is automatically set as a repeated reproduction section before repeated reproduction is performed (FIG. 14(C)). When neither [t = 0], [t < x], nor [t < Y] is satisfied, the overall length of the reproduction file is automatically set as a repeated reproduction section before repeated reproduction is performed (FIG. 14(D)). [t = 0] indicates that the length of desired repeated reproduction time is 0 and includes the case where a setting is not made.

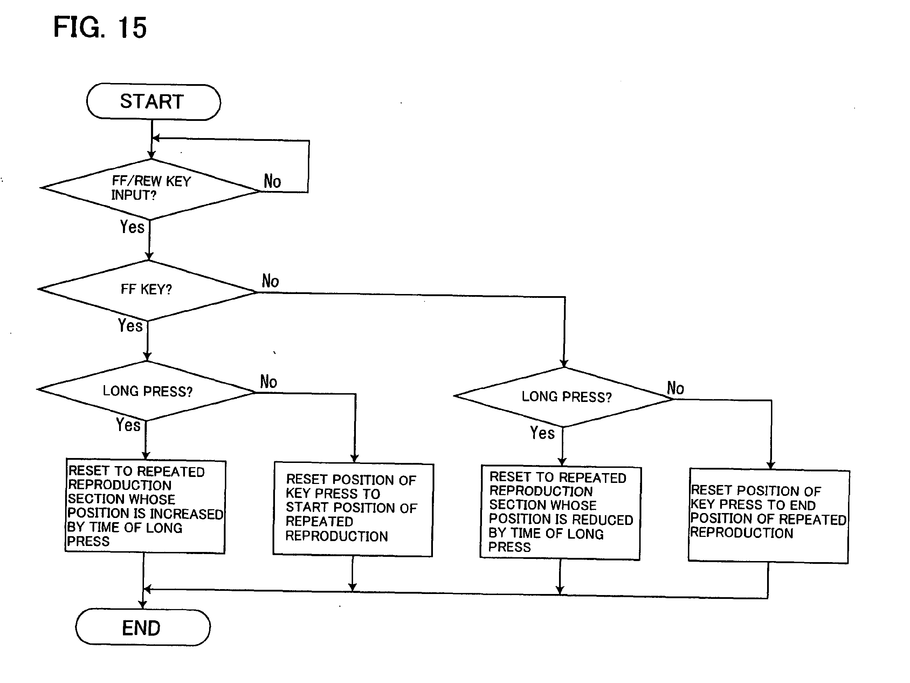

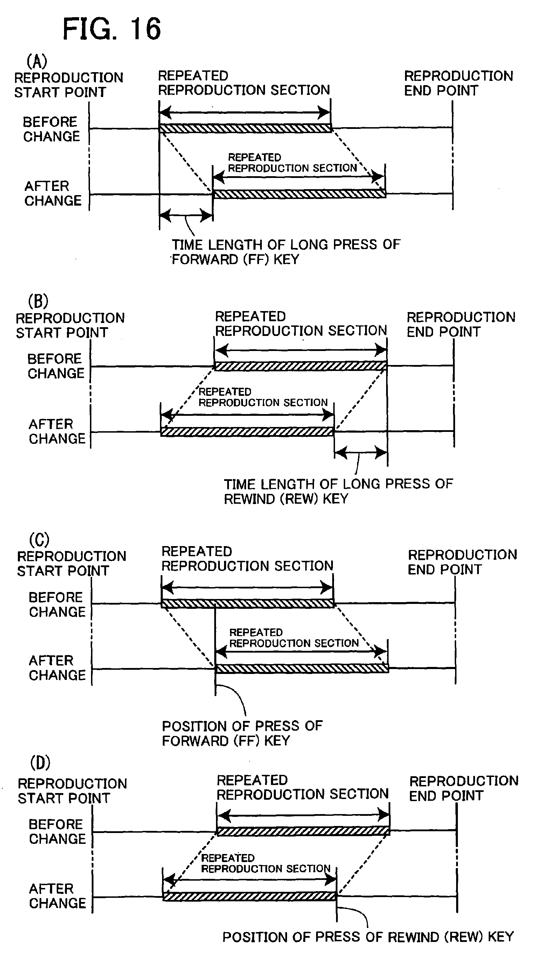

The way to move the set repeated reproduction section is to simply press the repeated reproduction section moving key during repeated reproduction. According to the method of moving the repeated reproduction section in the flowchart of FIG. 15, when the user requests the repeated reproduction section to move during repeated reproduction, the repeated reproduction section moves in the forward direction by the time of the long press in response to a long press on the repeated reproduction section forward direction moving key (FIG. 16(A)). The repeated reproduction section moves in the rewind direction by the time of the long press in response to a long press on the repeated reproduction section rewind direction moving key (FIG. 16(B)). With a short press on the repeated reproduction section forward direction moving key, a point where the key is pressed is changed to the start point of the repeated reproduction section and the repeated reproduction section is moved accordingly in the forward direction (FIG. 16(C)). With a short press on the repeated reproduction section rewind direction moving key, a point where the key is pressed is changed to the end point of the repeated reproduction section and the repeated reproduction section is moved accordingly in the rewind direction (FIG. 16(D)). The length of the repeated reproduction section after the movement is the same as the length before the movement. The two keys of the repeated reproduction section forward direction moving key and the repeated reproduction section rewind direction moving key may be provided as repeated reproduction section moving keys. The repeated reproduction section forward direction moving key may be assigned to the FF key and the repeated reproduction section rewind direction moving key may be assigned to the REW key. Alternatively, any given keys may be provided. An operation of the repeated reproduction section moving key may be assigned to a stick key.

With the recording medium reproducing apparatus according to claim 1 or 9 and the repeated reproduction method according to claim 2, 3, 4, 5, or 6, repeated reproduction can be easily performed by only one operation of the repeated reproduction key during the reproduction of the reproduction file. The user can freely set the time length of the repeated reproduction section. It is possible to automatically set the start point and end point of the repeated reproduction section and perform repeated reproduction for each situation including the overall length of the reproduction file, the length of the desired repeated reproduction time, a distance between a designated point of repeated reproduction and the start point or end point of the reproduction file. The recording medium reproducing apparatus, the repeated reproduction method, and the method of moving the repeated reproduction section are quite user-friendly because repeated reproduction can be performed by only one operation of the key, the repeated reproduction section can be moved by one operation of the key at minimum, and the operating method is quite simple and causes no excessive burden on the user.

With the repeated reproduction method according to claim 2, even when a distance from the end point of the reproduction file is shorter than the length of desired repeated reproduction time, repeated reproduction can be always performed while setting a designated point of repeated reproduction at the start point of the repeated reproduction section.

With the repeated reproduction method according to claim 3, when the reproduction file has an allowance of the length desired repeated reproduction time, repeated reproduction can be performed while setting a designated point of repeated reproduction at the start point of the repeated reproduction section. When a distance from the end point of the reproduction file is shorter than the length of desired repeated reproduction time, repeated reproduction can be performed by the length of desired repeated reproduction time regardless of a designated point of repeated reproduction. When the length of desired repeated reproduction time is not limited, repeated reproduction can be always performed while setting a section from the designated point of repeated reproduction to the end point of the reproduction file as a repeated reproduction section.

With the repeated reproduction method according to claim 4, repeated reproduction can be performed while setting the end point and start point of the repeated reproduction section in the forward direction and rewind direction of a designated point of repeated reproduction. The length of desired repeated reproduction can be divided into the front and rear. When a distance between a designated point of repeated reproduction and the start end or end point of the reproduction file is shorter than the length of desired repeated reproduction time, repeated reproduction can be performed while setting the start point or end point of the repeated reproduction file at the start point or end point of the repeated reproduction section.

With the repeated reproduction method according to claim 5, even when a distance from the start point of the reproduction file is shorter than the length of desired repeated reproduction time, repeated reproduction can be always performed while setting a designated point of repeated reproduction at the end point of the repeated reproduction section.

With the repeated reproduction method according to claim 6, when the reproduction file has an allowance of the length of desired repeated reproduction time, repeated reproduction can be performed while setting a designated point of repeated reproduction at the end point of the repeated reproduction section. When a distance from the start point of the reproduction point is shorter than the length of desired repeated reproduction time, repeated reproduction can be performed by the length of desired repeated reproduction time regardless of a designated point of repeated reproduction. When the length of desired repeated reproduction time is not limited, repeated reproduction can be always performed while setting a section from the designated point of repeated reproduction to the start point of the reproduction file as a repeated reproduction section.

With the method of moving the repeated reproduction section according to claim 7, four moving patterns can be freely used by two operating methods with two keys of the repeated reproduction section forward direction moving key and the repeated reproduction section rewind direction moving key. The repeated reproduction section can be quickly moved with accuracy by freely using the four moving operations. The repeated reproduction section can be moved by desired time and a desired point can be set at the start point or end point of the repeated reproduction section.

With the method of moving the repeated reproduction section according to claim 8, the repeated reproduction section can be moved by operating the FF key and the REW key.

With the recording medium reproducing apparatus according to claim 9, it is possible to perform all the repeated reproduction methods and methods of moving the repeated reproduction section for all kinds of repeated reproduction. It is possible to perform repeated reproduction after selecting a repeated reproduction method from the plurality of repeated reproduction methods in response to a request from the user.

## Claims

1. A recording medium reproducing apparatus, **characterized by** comprising: file reproducing means capable of reproducing a reproduction file recorded on a recording medium, repeated reproduction desired time setting means capable of setting a length (t) of desired repeated reproduction time, memory means for storing the length of desired repeated reproduction time, repeated reproduction designated point setting means capable of marking a designated point (a) of repeated reproduction only by one operation of a repeated reproduction key at a point where repeated reproduction is requested during reproduction of the reproduction file, comparing means capable of automatically setting a start point and an end point of a repeated reproduction section for each situation by reading data of [length of desired repeated reproduction time](t), [overall time length of the reproduction file](Y), and [position information on the designated point (a) of repeated reproduction] (x) in a length of the reproduction file, and comparing the data, repeated reproduction section moving means capable of moving, when the movement of the repeated reproduction section is requested, the repeated reproduction section in a forward direction or a rewind direction by operating a repeated reproduction section moving key during repeated reproduction while keeping the same length of repeated reproduction time as the length before the movement, and control means for controlling all operations.

2. A repeated reproduction method using a recording medium reproducing apparatus comprising file reproducing means capable of reproducing a reproduction file recorded on a recording medium, repeated reproduction desired time setting means capable of setting a length (t) of desired repeated reproduction time, memory means for storing the length of desired repeated reproduction time, repeated reproduction designated point setting means capable of marking a designated point (a) of repeated reproduction only by one operation of a repeated reproduction key at a point where repeated reproduction is requested during reproduction of the reproduction file, comparing means capable of automatically setting a start point and an end point of a repeated reproduction section for each situation by reading data of [length of desired repeated reproduction time](t), [overall time length of the reproduction file](Y), and [position information on the designated point (a) of repeated reproduction] (x) which is a length from the end point of the reproduction file, and comparing the data, repeated reproduction section moving means capable of moving, when a movement of the repeated reproduction section is requested, the repeated reproduction section in a forward direction or a rewind direction by operating a repeated reproduction section moving key during repeated reproduction while keeping the same length of repeated reproduction time as the length before the movement, and control means for controlling all operations, **characterized in that** the memory means stores the length (t) of desired repeated reproduction time which can be set by a user anytime, the reproduction file recorded on the recording medium is reproduced, the designated point (a) of repeated reproduction is set by one operation of the repeated reproduction key when repeated reproduction is requested, [length of desired repeated reproduction time] (t) and [position information on the designated point (a) of repeated reproduction] (x) which is a length from the end point of the reproduction file are read, the comparing means automatically sets, when [t ≥ x] is not satisfied, the length (t) of desired repeated reproduction time starting from the designated point (a) of repeated reproduction as a repeated reproduction section before repeated reproduction is performed, and the comparing means automatically sets, when [t ≥ x] is satisfied, a section from the designated point (a) of repeated reproduction to the end point of the reproduction file as a repeated reproduction section before repeated reproduction is performed.

3. A repeated reproduction method using a recording medium reproducing apparatus comprising file reproducing means capable of reproducing a reproduction file recorded on a recording medium, repeated reproduction desired time setting means capable of setting a length (t) of desired repeated reproduction time, memory means for storing the length of desired repeated reproduction time, repeated reproduction designated point setting means capable of marking a designated point (a) of repeated reproduction only by one operation of a repeated reproduction key at a point where repeated reproduction is requested during reproduction of the reproduction file, comparing means capable of automatically setting a start point and an end point of a repeated reproduction section for each situation by reading data of [length of desired repeated reproduction time](t), [overall time length of the reproduction file](Y), and [position information on the designated point (a) of repeated reproduction] (x) which is a length from the end point of the reproduction file, and comparing the data, repeated reproduction section moving means capable of moving, when a movement of the repeated reproduction section is requested, the repeated reproduction section in a forward direction or a rewind direction by operating a repeated reproduction section moving key during repeated reproduction while keeping the same length of repeated reproduction time as the length before the movement, and control means for controlling all operations, **characterized in that** the memory means stores the length (t) of desired repeated reproduction time which can be set by a user anytime, the reproduction file recorded on the recording medium is reproduced, the designated point (a) of repeated reproduction is set by one operation of the repeated reproduction key when repeated reproduction is requested, [length of desired repeated reproduction time](t), [overall time length of the reproduction file](Y), and [position information on the designated point (a) of repeated reproduction] (x) which is a length from the end point of the reproduction file are read, the comparing means automatically sets, when [t = 0] is satisfied, a section from the designated point (a) of repeated reproduction to the end point of the reproduction file as a repeated reproduction section before repeated reproduction is performed, the comparing means automatically sets, when [t = 0] is not satisfied but [t < x] is satisfied, the length (t) of desired repeated reproduction time starting from the designated point (a) of repeated reproduction as a repeated reproduction section before repeated reproduction is performed, the comparing means automatically sets, when neither [t = 0] nor [t < x] is satisfied but [t < Y] is satisfied, the length (t) of desired repeated reproduction time as a repeated reproduction section having the end point of the reproduction file at the end point of the repeated reproduction section before repeated reproduction is performed, and the comparing means automatically sets, when neither [t = 0], [t < x], nor [t < Y] is satisfied, an overall length of the reproduction file as a repeated reproduction section before repeated reproduction is performed.

4. A repeated reproduction method using a recording medium reproducing apparatus comprising file reproducing means capable of reproducing a reproduction file recorded on a recording medium, repeated reproduction desired time setting means capable of setting a length (t) of desired repeated reproduction time, memory means for storing the length of the desired repeated reproduction time, repeated reproduction designated point setting means capable of marking a designated point (a) of repeated reproduction only by one operation of a repeated reproduction key at a point where repeated reproduction is requested during reproduction of the reproduction file, comparing means capable of automatically setting a start point and an end point of a repeated reproduction section for each situation by reading data of [length of desired repeated reproduction time](t), [overall time length of the reproduction file](Y), [position information on the designated point (a) of repeated reproduction, which is a length from the end point of the reproduction file](x1), [position information on the designated point (a) of repeated reproduction, which is a length from the start point of the reproduction file] (x2) and comparing the data, repeated reproduction section moving means capable of moving, when a movement of the repeated reproduction section is requested, the repeated reproduction section in a forward direction or a rewind direction by operating a repeated reproduction section moving key during repeated reproduction while keeping the same length of repeated reproduction time as the length before the movement, and control means for controlling all operations, **characterized in that** the memory means stores the length (t) of desired repeated reproduction time which can be set by a user anytime, the length (t) being composed of desired repeated reproduction time (t1) in the forward direction and desired repeated reproduction time (t2) in the rewind direction from the designated point (a) of repeated reproduction, the reproduction file recorded on the recording medium is reproduced, the designated point (a) of repeated reproduction is set by one operation of the repeated reproduction key when repeated reproduction is requested, [desired repeated reproduction time (t) of desired repeated reproduction time (t1) in the forward direction and desired repeated reproduction time (t2) in the rewind direction] , [overall time length of the reproduction file](Y), and [position information (x1) on a length from the end point of the reproduction file and position information (x2) on a length from the start point of the reproduction file](x) are read, the comparing means automatically sets, when [t = 0] is satisfied or when [t = 0] is not satisfied but [t1 ≥ x1] and [t2 ≥ x2] are satisfied, an overall length of the reproduction file as a repeated reproduction section before repeated reproduction is performed, the comparing means automatically sets as a repeated reproduction section, when neither [t = 0] nor [t2 ≥ x2] is satisfied but [t1 ≥ x1] is satisfied, a section from a point preceding the designated point (a) of repeated reproduction by the length (t2) of desired repeated reproduction time in the rewind direction to the end point of the reproduction file before repeated reproduction is performed, the comparing means automatically sets, when neither [t = 0] nor [t1 ≥ x1] is satisfied but [t2 ≥ x2] is satisfied, the length (t1) of desired repeated reproduction time in the forward direction of the designated point (a) of repeated reproduction as a repeated reproduction section from the start end of the reproduction file before repeated reproduction is performed, and the comparing means automatically sets as a repeated reproduction section, when neither [t = 0], [t1 ≥ x1], nor [t2 ≥ x2] is satisfied, the length (t) of desired repeated reproduction time composed of the desired repeated reproduction time (t1) in the forward direction and the desired repeated reproduction time (t2) in the rewind direction of the designated point (a) of repeated reproduction.

5. A repeated reproduction method using a recording medium reproducing apparatus comprising file reproducing means capable of reproducing a reproduction file recorded on a recording medium, repeated reproduction desired time setting means capable of setting a length (t) of desired repeated reproduction time, memory means for storing the length of desired repeated reproduction time, repeated reproduction designated point setting means capable of marking a designated point (a) of repeated reproduction only by one operation of a repeated reproduction key at a point where repeated reproduction is requested during reproduction of the reproduction file, comparing means capable of automatically setting a start point and an end point of a repeated reproduction section for each situation by reading data of [length of desired repeated reproduction time](t), [overall time length of the reproduction file](Y), and [position information on the designated point (a) of repeated reproduction] (x) which is a length from the start point of the reproduction file, and comparing the data, repeated reproduction section moving means capable of moving, when a movement of the repeated reproduction section is requested, the repeated reproduction section in a forward direction or a rewind direction by operating a repeated reproduction section moving key during repeated reproduction while keeping the same length of repeated reproduction time as the length before the movement, and control means for controlling all operations, **characterized in that** the memory means stores the length (t) of desired repeated reproduction time which can be set by a user anytime, the reproduction file recorded on the recording medium is reproduced, the designated point (a) of repeated reproduction is set by one operation of the repeated reproduction key when repeated reproduction is requested, [length of desired repeated reproduction time] (t) and [position information on the designated point (a) of repeated reproduction] (x) which is a length from the start point of the reproduction file are read, the comparing means automatically sets, when [t ≥ x] is not satisfied, the length (t) of desired repeated reproduction as a repeated reproduction section having the designated point (a) of repeated reproduction at the end point of the repeated reproduction section before repeated reproduction is performed, and the comparing means automatically sets, when [t ≥ x] is satisfied, a section from the start point of the reproduction file to the designated point (a) of repeated reproduction as a repeated reproduction section before repeated reproduction is performed.

6. A repeated reproduction method using a recording medium reproducing apparatus comprising file reproducing means capable of reproducing a reproduction file recorded on a recording medium, repeated reproduction desired time setting means capable of setting a length (t) of desired repeated reproduction time, memory means for storing the length of desired repeated reproduction time, repeated reproduction designated point setting means capable of marking a designated point (a) of repeated reproduction only by one operation of a repeated reproduction key at a point where repeated reproduction is requested during reproduction of the reproduction file, comparing means capable of automatically setting a start point and an end point of a repeated reproduction section for each situation by reading data of [length of desired repeated reproduction time](t), [overall time length of the reproduction file](Y), and [position information on the designated point (a) of repeated reproduction] (x) which is a length from the start point of the reproduction file, and comparing the data, repeated reproduction section moving means capable of moving, when a movement of the repeated reproduction section is requested, the repeated reproduction section in a forward direction or a rewind direction by operating a repeated reproduction section moving key during repeated reproduction while keeping the same length of repeated reproduction time as the length before the movement, and control means for controlling all operations, **characterized in that** the memory means stores the length (t) of desired repeated reproduction time which can be set by a user anytime, the reproduction file recorded on the recording medium is reproduced, the designated point (a) of repeated reproduction is set by one operation of the repeated reproduction key when repeated reproduction is requested, [length of desired repeated reproduction time](t), [overall time length of the reproduction file(Y)], and [position information on the designated point (a) of repeated reproduction] (x) which is a length from the start point of the reproduction file are read, the comparing means automatically sets, when [t = 0] is satisfied, a section from the start point of the reproduction file to the designated point (a) of repeated reproduction as a repeated reproduction section before repeated reproduction is performed, the comparing means automatically sets, when [t = 0] is not satisfied but [t < x] is satisfied, the length (t) of desired repeated reproduction as a repeated reproduction section having the designated point (a) of repeated reproduction at the end point of the repeated reproduction section before repeated reproduction is performed, the comparing means automatically sets, when neither [t = 0] nor [t < x] is satisfied but [t < Y] is satisfied, the length (t) of desired repeated reproduction time from the start end point of the reproduction file as a repeated reproduction section before repeated reproduction is performed, and the comparing means automatically sets, when neither [t = 0], [t < x], nor [t < Y] is satisfied, an overall length of the reproduction file as a repeated reproduction section before repeated reproduction is performed.

7. A method of moving a repeated reproduction section in a recording medium reproducing apparatus capable of implementing the repeated reproduction method according to claim 2, 3, 4, 5 or 6, **characterized by** comprising: moving a repeated reproduction section in a forward direction by time of a long press in response to the long press on a repeated reproduction section forward direction moving key when a user requests a movement of the repeated reproduction section during repeated reproduction; moving the repeated reproduction section in a rewind direction by time of a long press in response to the long press on a repeated reproduction section rewind direction moving key; changing a point where the repeated reproduction section forward direction moving key is shortly pressed to a start point of the repeated reproduction section and moving the repeated reproduction section accordingly; and changing a point where the repeated reproduction section rewind direction moving key is shortly pressed to an end point of the repeated reproduction section and moving the repeated reproduction section accordingly; the moved repeated reproduction section having a length equal to a length before the movement.

8. The method of moving the repeated reproduction section according to claim 7, **characterized in that** the repeated reproduction section forward direction moving key is assigned to an FF key and the repeated reproduction section rewind direction moving key is assigned to a REW key.

9. A recording medium reproducing apparatus capable of implementing at least two or more of the repeated reproduction methods according to claim 2, 3, 4, 5, or 6 and the method of moving the repeated reproduction section according to claim 7 or 8, the apparatus **characterized by** comprising repeated reproduction method selecting means allowing a user to select a desired repeated reproduction method.
